# EUROPÄISCHE PATENTANMELDUNG

(11) **EP 2 878 525 A1**
(43) Veröffentlichungstag der Anmeldung: **03.06.2015**
(21) Anmeldenummer: 14195585.6
(22) Anmeldetag: 01.12.2014
(51) Int. Cl.: B62K 25/02

(54) **Steckbare Achseneinrichtung für ein Laufrad**

(30) Priorität: 29.11.2013 DE 202013009812 U
(71) Anmelder: Derby Cycle Werke GmbH, 49661 Cloppenburg (DE)
(72) Erfinder: Scholz, Fabian, 70178 Stuttgart (DE)
(74) Vertreter: Jabbusch, Matthias

(57) **Zusammenfassung**

Bei einer steckbaren Achseneinrichtung für ein Laufrad, insbesondere für ein Laufrad eines Fahrrades, umfassend einen Achsenabschnitt (4) für das Laufrad, der mit einer Betätigungseinrichtung (6) und mit einer Verbindungseinrichtung (8) zur festen Anlage an das Laufrad aufnehmenden Bauteilen ausgerüstet ist, ist vorgesehen, dass die Verbindungseinrichtung (8) und die Betätigungseinrichtung (6) an einander gegenüberliegenden freien Enden des Achsenabschnittes (4) angeordnet sind und jeweils mit dem Achsenabschnitt (4) drehfest verbunden sind.

## Beschreibung

Die Erfindung betrifft eine steckbare Achseneinrichtung für ein Laufrad, insbesondere für ein Laufrad eines Fahrrades, umfassend einen Achsenabschnitt für das Laufrad, der mit einer Betätigungseinrichtung und mit einer Verbindungseinrichtung zur festen Anlage an das Laufrad aufnehmenden Bauteilen ausgerüstet ist.

Fahrzeuge, insbesondere Zweiräder und davon insbesondere Fahrräder weisen Laufräder auf. Die Laufräder haben jeweils eine Nabe, mit dieser Nabe in Verbindung stehende Felgen sowie Schläuche und Reifen oder auch schlauchlose Reifen. Nabe und Felge des Laufrades sind regelmäßig über Speichen miteinander verbunden.

Die Nabe wird auf einer Achse angeordnet, um die sich das Laufrad bei einer Fortbewegung des insbesondere Fahrrades drehen kann. Im Stand der Technik sind Achsen bekannt, die in Naben von Laufrädern eingesetzt werden und insoweit mit diesen verbunden sind. Daneben sind gattungsgemäße steckbare Achseneinrichtungen bekannt, die von Laufrädern separat angeordnet sind.

Eine steckbare Achseneinrichtung kann von außen durch Abschnitte der das Laufrad aufnehmenden Bauteile sowie die Nabe des Laufrades hindurchgeführt werden und anschließend mit den das Laufrad aufnehmenden Bauteilen verbunden werden. Vorteil ist eine schnelle Montage des Laufrades und insbesondere eine schnelle Demontage insbesondere im Pannenfall. Das Laufrad aufnehmende Bauteile sind beispielsweise Abschnitte eines Fahrzeugrahmens, gegebenenfalls an Kettenstreben angeordnete Ausfallenden eines Fahrradrahmens.

Der Erfindung liegt die Aufgabe zugrunde, eine steckbare Achseneinrichtung aufzuzeigen, die einfach ausgebildet ist und wenige Bauteile aufweist.

Diese Aufgabe ist erfindungsgemäß dadurch gelöst, dass die Verbindungseinrichtung und die Betätigungseinrichtung an einander gegenüberliegenden freien Enden des Achsenabschnittes angeordnet sind und jeweils mit dem Achsenabschnitt drehfest verbunden sind.

Die erfindungsgemäße Achseneinrichtung weist wie im Stand der Technik auch eine Betätigungseinrichtung zu ihrer Festlegung und eine Verbindungseinrichtung zu ihrem Verbinden mit das Laufrad aufnehmenden Bauteilen auf. Diese sind nach der Erfindung an einander gegenüberliegenden freien Enden des Achsenabschnittes angeordnet und somit nur dort. Es findet jeweils eine drehfeste Verbindung dieser Bauteile mit dem Achsenabschnitt statt, so dass es keine durch den Achsenabschnitt hindurchgeführten Bauteile gibt. Der Achsenabschnitt allein verbindet Betätigungseinrichtung und Verbindungseinrichtung miteinander.

Die Ausbildung der erfindungsgemäßen Achseneinrichtung ist auf diese Weise vereinfacht, der Achsenabschnitt dient einerseits zur Aufnahme der Nabe des Laufrades, andererseits kann er von der Betätigungseinrichtung eingebrachte Betätigungskräfte an die Verbindungseinrichtung übertragen.

Nach einer ersten Weiterbildung der Erfindung ist vorgesehen, dass der Achsenabschnitt eine zumindest abschnittsweise Hohlachse ist. Eine abschnittsweise Ausbildung als Hohlachse reicht aus, damit in die freien Enden des Achsenabschnittes und in dort angeordnete Hohlachsenabschnitte Bauteile der Verbindungseinrichtung und der Betätigungseinrichtung eingeführt werden können.

So hat beispielsweise die Betätigungseinrichtung einen in das freie Ende des Achsenabschnittes eingeführten Schaft, an dem ein Hebelelement angreift. Mit dem Hebelelement kann eine Lageveränderung des Schaftes und damit des Achsenabschnittes vorgenommen werden, um eine lagefeste Klemmung an das Laufrad aufnehmenden Bauteilen zu erreichen.

Die Verbindungseinrichtung kann nach einer Weiterbildung der Erfindung eine Nockenausgestaltung haben, die mit einer im Bauteil für das Laufrad angeordneten Nockenaufnahme in wechselnde Anlagen bringbar ist. Die wechselnden Anlagen können beispielsweise durch eine Drehung der Nockenausgestaltung erreicht werden, diese Drehung wird der Nockenausgestaltung über den Achsenabschnitt ausgehend von der Betätigungseinrichtung zugeführt. Die wechselnden Anlagen können zu einer lösbaren Anlage und zu einer festen Anlage führen.

Zur weiteren Ausbildung der Erfindung ist noch vorgesehen, dass die Nockenaufnahme ein in ein Ausfallende für das Laufrad eingesetztes Schlosselement ist, das zwei Drehstellungen für die Nockenausgestaltung hat. Eine Drehstellung kann für einen festen Sitz der Nockenausgestaltung dienen, die andere Drehstellung ihr Herausnehmen ermöglichen. Die Nockenaufnahme bildet insofern eine Art Bajonettverschluss für die Nockenausgestaltung aus.

Ein Ausführungsbeispiel der Erfindung, aus dem sich weitere erfinderische Merkmale ergeben, ist in der Zeichnung dargestellt. Es zeigen:
- Fig. 1 bis Fig. 4:: jeweils eine perspektivische Teilansicht eines Fahrradrahmens mit einer erfindungsgemäßen steckbaren Achseneinrichtung,
- Fig. 5 und Fig. 6:: perspektivische Teilansichten des Fahrradrahmens mit der Achseneinrichtung in voneinander verschiedenen Drehstellungen, und
- Fig. 7:: eine perspektivische Explosionsdarstellung der erfindungsgemäßen Achseneinrichtung.

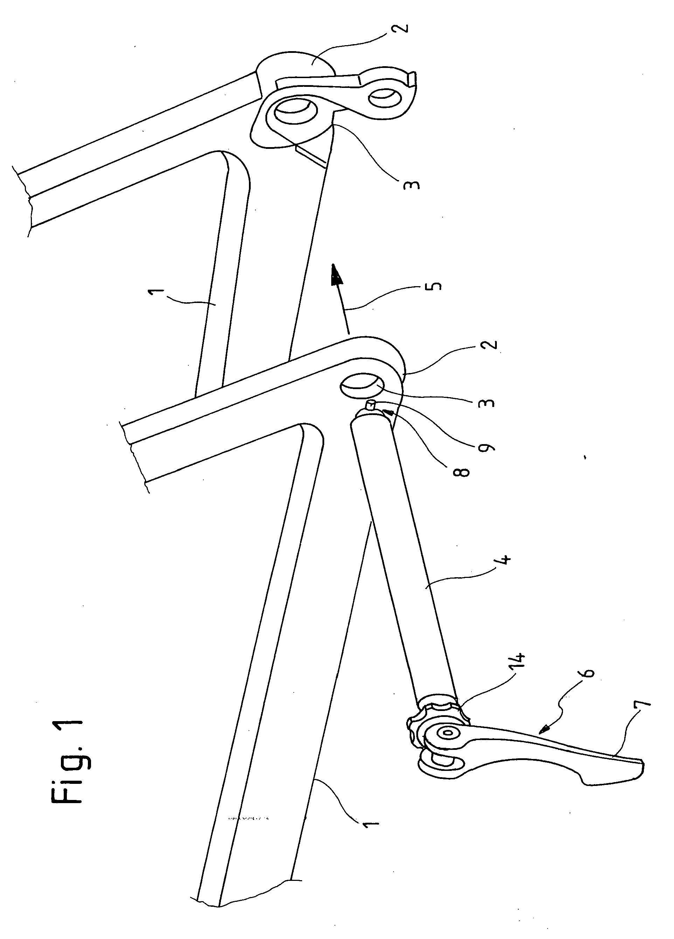

Fig. 1 zeigt in Teilansicht die unteren Kettenstreben 1 eines Fahrradrahmens, die im Bereich von Ausfallenden 2 in nicht weiter dargestellte obere Kettenstreben übergehen. Die Ausfallenden 2 haben Durchbrüche 3, durch die ein Achsenabschnitt 4 der erfindungsgemäßen Achseneinrichtung hindurchführbar ist, Pfeil 5.

Der Achsenabschnitt 4 hat an einem freien Ende eine Betätigungseinrichtung 6, die einen Klemmhebel 7 umfasst. Am anderen freien Ende des Achsenabschnittes 4 ist eine Verbindungseinrichtung 8 angeordnet. Die Verbindungseinrichtung 8 umfasst eine Nockenausgestaltung 9 mit seitlich vorstehenden Nocken.

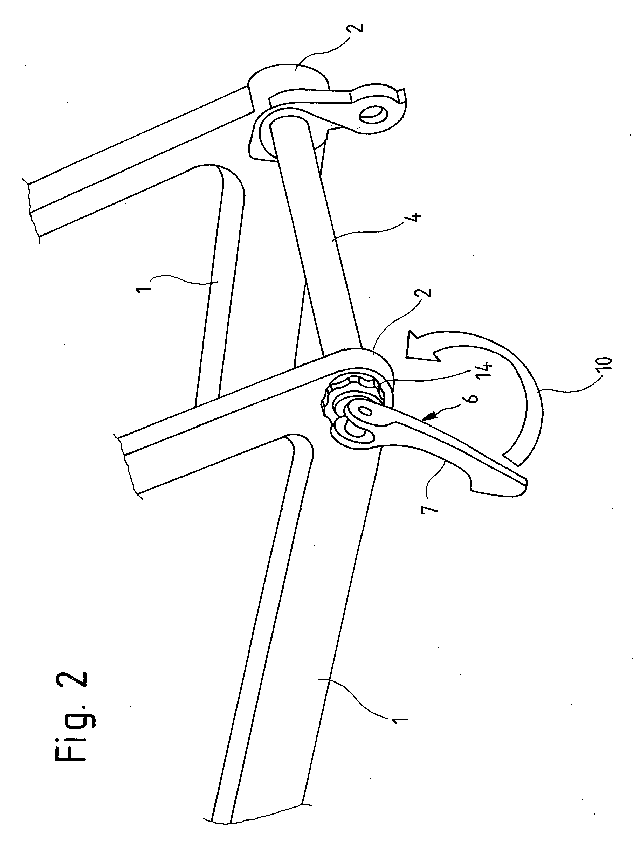

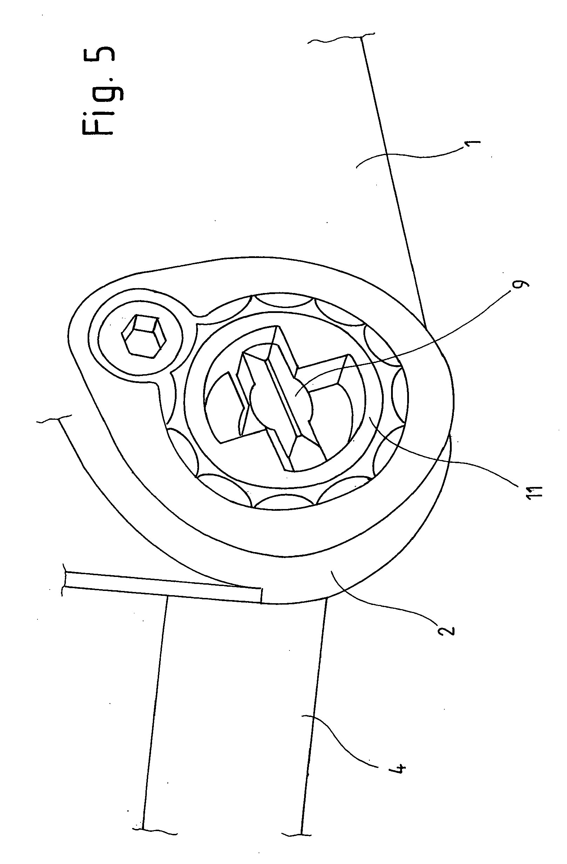

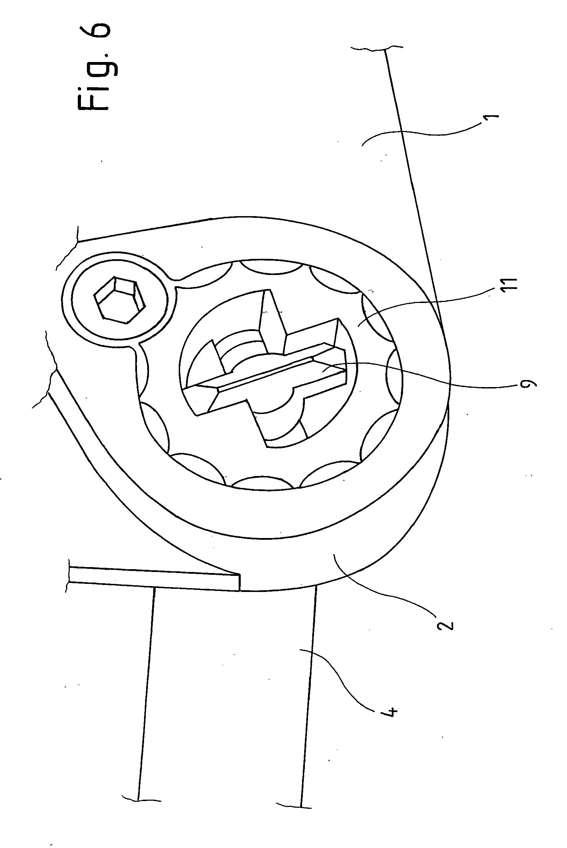

In Fig. 2 ist der Achsenabschnitt 4 durch die Durchbrüche 3 in den Ausfallenden 2 hindurchgeführt, der Klemmhebel 7 befindet sich noch in gelöster Position. Jetzt kann eine Verdrehung des Achsenabschnittes 4 mit dem Klemmhebel 7 entlang Pfeil 10 erfolgen, dabei wird die Nockenausgestaltung 9 verdreht, Fig. 5 und 6.

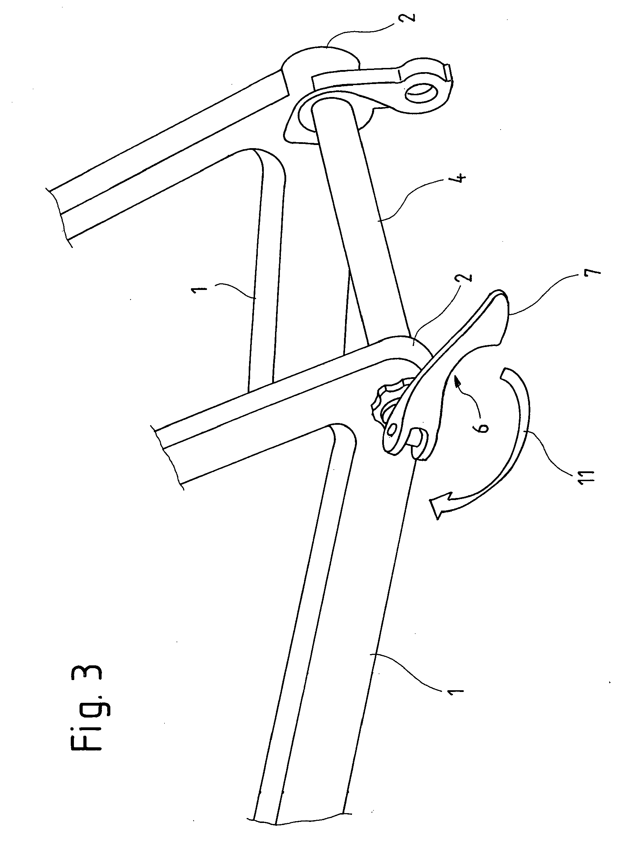

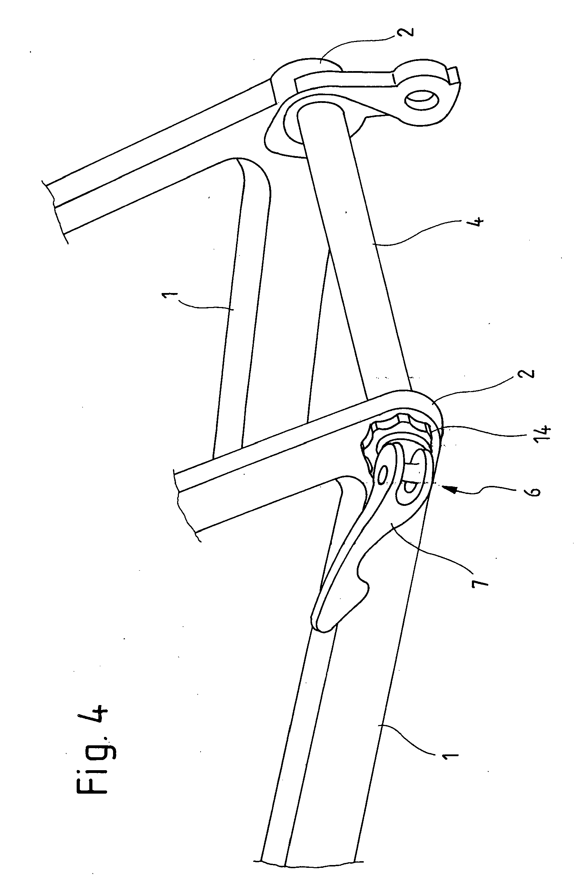

Fig. 3 zeigt den Endpunkt der Verdrehung des Achsenabschnittes 4 mit dem Klemmhebel 7. Die Verdrehung erfolgte über etwa 90°, jetzt kann der Klemmhebel 7 durch Verschwenken entlang Pfeil 11 in seine Klemmposition gebracht werden, die in Fig. 4 gezeigt ist. In dieser Position ist der Achsenabschnitt 4 in Richtung des Klemmhebels 7 verschoben, die Nockenausgestaltung 9 ist in eine feste Anlage mit dem Ausfallende 2 der Kettenstrebe 1 eingetreten.

In Fig. 5 ist die Nockenausgestaltung 9 des Achsenabschnittes 4 zu erkennen, sie ist hier in eine Nockenaufnahme 11 eingeführt. Die Nocken der Nockenausgestaltung 9 sind dabei noch Durchbrüchen zugeordnet, im in Fig. 5 gezeigten Zustand ist die Verbindungseinrichtung noch nicht geschlossen. Der in Fig. 5 gezeigte Zustand entspricht der in Fig. 2 dargestellten Drehstellung des Achsenabschnittes 4.

Fig. 6 zeigt dann den Drehzustand des Achsenabschnittes 4 aus Fig. 3 und 4. Die Nockenausgestaltung 9 ist verdreht, sie greift in der Nockenaufnahme 11 hinter Hinterschneidungen. Mit dem Klemmhebel 7 wird die Nockenausgestaltung 9 gegen die Nockenaufnahme 11 gezogen, so dass sich eine kraftschlüssige Verbindung zwischen Achsenabschnitt 4 und Ausfallenden 2 der Kettenstreben 1 ausbildet.

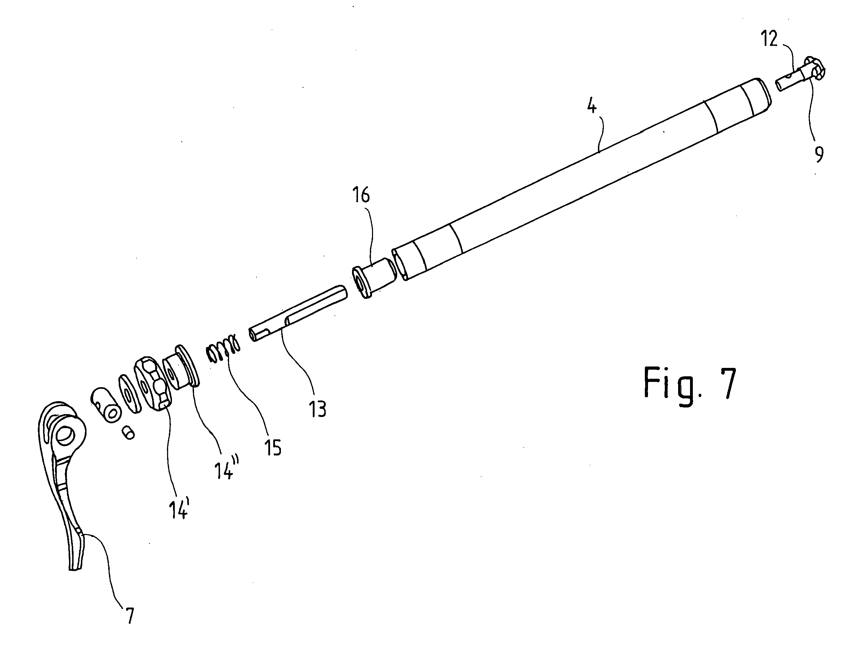

Fig. 7 zeigt die einzelnen Bauteile der erfindungsgemäßen Achseneinrichtung mit Achsenabschnitt 4 und Nockenausgestaltung 9. Die Nockenausgestaltung 9 hat einen Abschnitt 12, der an das freie Ende des Achsenabschnittes 4 drehfest eingebracht werden kann.

Dem anderen freien Ende des Achsenabschnittes 4 ist ein Schaft 13 zugeordnet, auf dem Spannelemente 14 mit dem Klemmhebel 7 gegen eine Feder 15 verschoben werden können. Die Spannelemente 14', 14" dienen einem Ausgleich von Spiel und Toleranzen von Rahmenbauteilen und Steckachseneinrichtung. Ein Spannelement 14" ist verdrehsicher auf dem Schaft 13 angebracht, dass andere Spannelement 14' ist verdrehbar. Mit diesem Spannelement 14' ist der Abstand zwischen dem Klemmhebel 7 und dem Auswahlende 2 veränderbar. Der Schaft 13 wird dabei über ein Flanschbauteil 16 drehfest in das freie Ende des Achsenabschnittes 4 eingebracht.

## Patentansprüche

1. Steckbare Achseneinrichtung für ein Laufrad, insbesondere für ein Laufrad eines Fahrrades, umfassend einen Achsenabschnitt für das Laufrad, der mit einer Betätigungseinrichtung und mit einer Verbindungseinrichtung zur festen Anlage an das Laufrad aufnehmenden Bauteilen ausgerüstet ist,
**dadurch gekennzeichnet,**
**dass** die Verbindungseinrichtung (8) und die Betätigungseinrichtung (6) an einander gegenüberliegenden freien Enden des Achsenabschnittes (4) angeordnet sind und jeweils mit dem Achsenabschnitt (4) drehfest verbunden sind.

2. Achseneinrichtung nach Anspruch 1, **dadurch gekennzeichnet, dass** der Achsenabschnitt (4) eine zumindest abschnittsweise Hohlachse ist.

3. Achseneinrichtung nach Anspruch 1 oder 2, **dadurch gekennzeichnet, dass** die Betätigungseinrichtung (6) einen in das freie Ende des Achsenabschnitts (4) eingeführten Schaft (13) hat, an dem ein Hebelelement (7) angreift.

4. Achseneinrichtung nach einem der vorhergehenden Ansprüche, **dadurch gekennzeichnet, dass** die Verbindungseinrichtung (8) eine Nockenausgestaltung (9) hat, die mit einer im Bauteil für das Laufrad angeordneter Nockenaufnahme (11) in wechselnde Anlagen bringbar ist.

5. Achseneinrichtung nach Anspruch 4, **dadurch gekennzeichnet, dass** die Nockenaufnahme (11) ein in ein Ausfallende (2) für das Laufrad eingesetztes Schlosselement ist, das zwei Drehstellungen für die Nockenausgestaltung (9) hat.
